# EUROPEAN PATENT APPLICATION

(11) **EP 2 279 854 A1**
(43) Date of publication of application: **02.02.2011**
(21) Application number: 09382122.1
(22) Date of filing: 27.07.2009
(51) Int. Cl.: B29D 35/14

(54) **Highly elastic integral footware sole manufacturing method, and footware obtained by said method**

(71) Applicant: Vicente De Vera Gil, Jesus, 50012 Zaragoza (ES)
(72) Inventor: Vicente De Vera Gil, Jesus, 50012 Zaragoza (ES)
(74) Representative: Martin Santos, Victoria Sofia

(57) **Abstract**

An integral sole manufacturing method comprising a first step in which the bottom or underside of the sole (1) is formed by injection, having on its top a number of hollows or empty spaces (2) and on which a material having a hardness lower than that of the bottom is subsequently injected, which can be a gel or a viscoelastic material or a low density and hardness elastomer, and having a density below 30 kg/cm3, so that a highly elastic integral sole is obtained, having high levels of comfort and preventing from water entering the footwear in the event of the bottom of the underside of the sole getting perforated.

## Description

### OBJECT OF THE INVENTION

It is an object of the present invention both to provide a highly elastic integral footwear sole manufacturing method, and footwear obtained by said method.

The present invention is characterized by the special configuration, design, materials and series of steps that take place in the manufacturing of the sole of the invention, which will result in an integral sole, formed in a single piece, which has high elasticity, greater comfort, and prevents water from entering inside the footwear.

The present invention therefore belongs to the field of footwear and especially to the field of methods employed in sole manufacturing.

### BACKGROUND OF THE INVENTION

In footwear sole manufacturing different methods are used, from which we emphasize pouring or casting and injection moulding.

In the pouring or casting manufacturing method, from a mould with an open cavity corresponding to the sole of the footwear, in principle, a polyurethane fluid is poured into that cavity, having a higher hardness than the rest of the pouring or casting, so as to withstand friction against the floor for longer and therefore undergo less wear. Above this first poured layer a second pouring or casting of the same product is provided, but having a lower density, so as to provide a higher cushioning for the foot when being in contact with this part.

The disadvantage of the soles obtained by this manufacturing method is that the obtained soles are very rigid and that the same material is always employed, although an integral sole is obtained, i.e., it is formed in a single piece.

The above second manufacturing method is based on injection moulding comprising the injection of an elastomer into a mould which at the bottom of the sole will take the shape designed by the manufacturer. However, in the part of the sole being in contact with the foot, and so as to lighten the weight of the sole, empty spaces are left, and subsequently another previously die cut material is housed in said empty spaces with the shape of the empty spaces left. The material employed to fill the empty spaces is softer than that of the bottom or underside of the sole, the two of them being cemented.

A disadvantage of the soles manufactured by this method is that in the event of the sole getting perforated, rainwater will easily penetrate through the cementing of both materials, and moreover it is not an integral sole, since they are two cemented parts.

It is therefore an object of the present invention to develop a method and a sole obtained by this new method which overcome the aforementioned disadvantages, i.e., on the one hand to provide an integral sole, i.e., a sole not to be formed by several parts, and on the other hand to provide a non rigid sole.

### DESCRIPTION OF THE INVENTION

It is an object of the present invention to provide a footwear sole manufacturing method which essentially comprises using the injection moulding technique in order to form the sole in the hollows or empty spaces formed on the top of the sole and to be in contact with the sole of the foot, another highly elastic material being provided, such as a viscoelastic material, or a gel or a low density and hardness elastomer.

Thus, a highly elastic integral sole has been obtained.

The fact of the sole being integral is that the sole is not the result of cementing or attaching two parts, but the bottom of the polyurethane and/or elastomers injected sole and the filling material for the empty spaces on the top of the sole form both a single assembly.

Elasticity is achieved by pouring elastic materials such as gels, or a viscoelastic material or a low density and hardness elastomer.

As a result of the above process a sole formed in a single body is achieved, since the materials employed have melted in a single body, and which in the event of the bottom of the sole getting perforated, rainwater is prevented from reaching inside the footwear where, in addition, footwear show a higher elasticity than soles manufactured by known methods.

### DESCRIPTION OF THE DRAWINGS

In order to complete the following description and to assist in a better understanding of its features, a set of diagrams are herein appended wherein, by way of illustration and not restrictively, the most significant details of the invention are depicted.
Figure 1 shows a representation of a bottom lateral view of a sole.
Figure 2 shows a plan view of the sole of the invention where the empty spaces left to be filled up with a high elasticity and low hardness material are shown.

### PREFERRED EMBODIMENT OF THE INVENTION

In view of the figures a preferred embodiment of the proposed invention is hereinafter described.

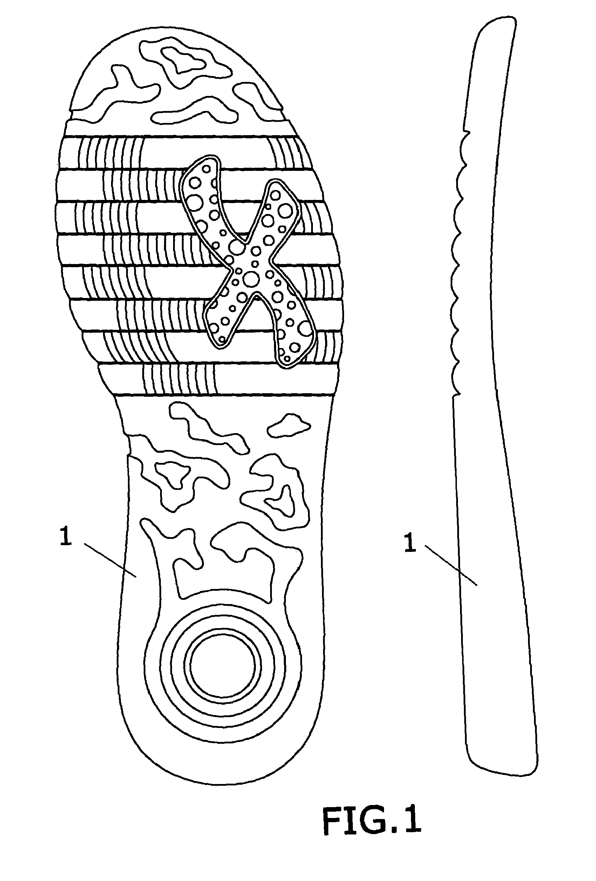

Figure 1 shows the appearance of the lower face of the bottom or the underside of the sole (1), as well as the lateral view thereof, having the sole been obtained as a result of a process of injecting a polyurethane material and/or elastomers in a mould earlier designed for adopting the final shape.

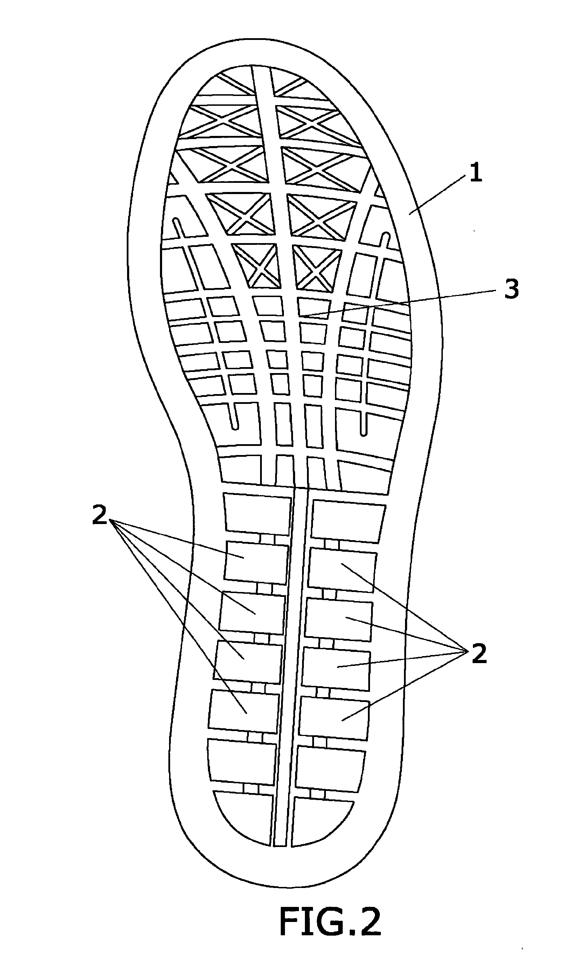

Figure 2 shows the upper face of the bottom or underside of the sole (1), wherein at the heel part empty spaces or hollows (2) can be seen in which a low density material is injected, such as a gel, or a viscoelastic material or a low density (3) and hardness elastomer, as can be seen at the front of the foot. Provision by injection of the gel or a viscoelastic material or a low density elastomer at the bottom or underside of the sole provides high elasticity and low hardness to the assembly.

An integral sole formed in a single body that leaves no fissures between parts and having high elasticity is thus obtained, since the density of the material injected inside the empty spaces or hollows (2) of the upper face of the sole has a density below 30 kg/ m³.

The essence of this invention is not affected by variations in the materials, shape, size and arrangement of the component elements, described in a non limiting manner such that it allows its reproduction by an expert.

## Claims

1. A footwear sole manufacturing method which uses an injection manufacturing method and which from a first step the bottom or underside of the sole (1) is formed by injection, having at the upper face of said bottom or underside of the sole (1) a number of hollows or empty spaces (2), **characterized in that** on said empty spaces or hollows, in a second step, a material having a density lower than that of the bottom or underside of the sole (1) is injected.

2. A footwear sole manufacturing method according to claim 1, **characterized in that** the material injected in the second step at the bottom or underside of the sole is a gel or a viscoelastic material or a low density and hardness elastomer.

3. A footwear sole manufacturing method according to claim 1 or 2, **characterized in that** the density of the material injected in the second step is below 30 kg/m³.

4. A footwear having a sole obtained by the above claimed method, **characterized in that** the sole comprises a bottom or underside of the sole (1) formed by injection of polyurethane and/or elastomers, having on its upper face a number of hollows or empty spaces (2) on which a material of a density lower than that of the bottom or underside of the sole (1) is injected.

5. A footwear according to claim 5, **characterized in that** the material injected at the bottom or underside of the sole(1)is a gel or a viscoelastic material or a low density elastomer.

6. A footwear according to claim 5 or 6, **characterized in that** the material injected at the bottom or underside of the sole (1) has a density below 30 kg/m³.

## Amended claims

### Amended claims in accordance with Rule 137(2) EPC.

**1.** A footwear having a sole obtained by the above claimed method, **characterized in that** the sole comprises a bottom or underside of the sole (1) formed by injection of polyurethane and/or elastomers, having on its upper face a number of hollows or empty spaces (2) on which gel is injected.

**2.** A footwear according to claim 5 or 6, **characterized in that** the gel injected at the bottom or underside of the sole (1) has a density below 30 kg/m³.
